**Europäisches Patentamt**

**European Patent Office**

**Office européen des brevets**

(19)

(11) Veröffentlichungsnummer: **0 163 828**
A1

## (12) EUROPÄISCHE PATENTANMELDUNG

(21) Anmeldenummer: 85103188.0

(51) Int. Cl.⁴: **B 23 K 9/04**

(22) Anmeldetag: 19.03.85

---

(30) Priorität: 06.06.84 DE 3421031

(43) Veröffentlichungstag der Anmeldung: 11.12.85
**Patentblatt 85/50**

(84) Benannte Vertragsstaaten: **AT CH FR GB IT LI NL SE**

(71) Anmelder: **M.A.N. MASCHINENFABRIK AUGSBURG-NÜRNBERG Aktiengesellschaft, Bahnhofstrasse 66, D-4200 Oberhausen 11 (DE)**

(72) Erfinder: **Million, Karl, Dr.-Ing., Beerenstrasse 40, D-4200 Oberhausen 11 (DE)**
Erfinder: **Datta, Ratan, Dipl.-Ing., Elstnerstrasse 26, D-4200 Oberhausen 11 (DE)**
Erfinder: **Zimmermann, Horst, Genterstrasse 111, D-4200 Oberhausen 11 (DE)**

(54) **Verfahren zur Herstellung eines Konstruktionsteils durch formgebende Auftragsschweissung, sowie nach dem Verfahren hergestelltes Konstruktionsteil.**

(57) Verfahren zur Herstellung eines Konstruktionsteiles aus Schweißgut durch formgebende Viellagen-Auftragsschweissung, wobei das Schweißgut in Schweißraupenlagen aufgetragen und das Gefüge einer Schweißraupenlage beim Auftragen folgender Lagen ein- oder mehrfach thermisch umgewandelt wird, wobei jeweils derart werkstoffabhängige günstige Schweißraupenform, Schmelzbadtiefe, Einbrandtiefe, Tiefe der darunterliegenden grobkörnig umgewandelten, bzw. feinkörnig umgewandelten Gefügezonen vorgegeben werden, daß die darunterliegenden Gefügeschichten vollkommen in eine Zone feinkörnigen Gefüges umgewandelt werden und das Konstruktionsteil ein homogen-feinkörniges Gefüge aufweist.

Verfahren zur Herstellung eines Konstruktionsteils durch formgebende Auftragsschweißung, sowie nach dem Verfahren hergestelltes Konstruktionsteil

---

Die Erfindung betrifft ein Verfahren zur Herstellung eines Konstruktionsteiles aus Schweißgut durch formgebende Viellagen-Auftragsschweißung, wobei das Schweißgut in Schweißraupenlagen aufgetragen und das Gefüge einer Schweißraupenlage beim Auftragen folgender Lagen ein- oder mehrfach thermisch umgewandelt wird. Weiter betrifft die Erfindung ein nach dem Verfahren hergestelltes Konstruktionsteil.

Beim Form-Schweißen handelt es sich um ein bekanntes Verfahren zur Herstellung von Konstruktionsteilen vollständig aus Schweißgut. Beispielsweise können Erzeugnisse aus niedrig- und hochlegierten Stählen, wie z. B. Schüsse, Böden, Stutzen und Rohrkrümmer für den nuklearen oder chemischen Apparatebau durch das Fertigungsverfahren des Form-Schweißens schnell und wirtschaftlich hergestellt werden, wobei höchste Werkstoffqualitäten erfüllt werden. Das Form-Schweißen eignet sich als Herstellungsverfahren hoch beanspruchter Konstruktionsteile besonders wegen isotroper Werkstoffeigenschaften und flexibler Formgebungsmöglichkeiten.

Dabei werden hochproduktive, mechanisierte Schweißverfahren verwendet, wie z. B. das im Apparatebau vielseitig bewährte Unterpulverschweißverfahren (UP). Wesentliche Vorteile der Herstellung von Konstruktionsteilen durch Form-Schweißen sind kurze Herstellungszeiten, relativ geringer Fertigungsaufwand, und die Möglichkeit der einteiligen Formgebung ohne Schweißnähte, sowohl in Werkstätten als auch auf Baustellen. Schließlich sind für das so hergestellte Teil außer Spannungsarmglühung keine weiteren Wärmebehandlungen, z. B. durch Vergüten, erforderlich.

Beim lagenweisen Auftragen von Schweißraupen nach üblichen Verfahren der Auftragsschweißung im UP-Verfahren mittels Einzelelektrode oder zwei hintereinander angeordneten Elektroden (Tandemverfahren) ergibt sich im Querschnitt der Schweißraupe eine geometrische Fläche in Pilzform mit relativ flacher Oberseite und tropfenförmig nach unten zu verlaufender Wurzel. Durch diese Schweißraupen-Geometrie ergibt sich, daß ein erheblicher Anteil der darunterliegenden Schweißraupe wieder aufgeschmolzen wird, unter Verlust der dafür aufzuwendenden Energie. Darüber hinaus bleibt im Bereich unterhalb der Wärmeeinflußzone der neuaufgetragenen Schweißraupenlage ein Teil des Gußgefüges der darunterliegenden Schweißraupenlage ungenügend thermisch beeinflußt und folglich nicht umgewandelt. Dadurch, daß die neu aufgetragene Lage im Bereich der Grenzschicht die vorherige Lage thermisch teilweise zu einem gröberen Gefüge umkörnt, entstehen im Auftragsmaterial schichtenweise Gußgefügereste und grobkörnige Zonen.

Weil insbesondere zur Erzielung einer ausreichenden Zähigkeit des Schweißgutes das Gefüge möglichst feinkörnig und homogen sein muß, bewirken die im unteren Randbereich jeder Schweißraupe ausgebildeten schichtförmigen Zonen gußartigen und grobkörnigen Gefüges eine Qualitätsminderung insbesondere bezüglich der Zähigkeit des Schweißgutes.

Der Erfindung liegt die Aufgabe zugrunde, bei einem Verfahren zur Herstellung eines Konstruktionsteils aus Schweißgut durch formgebende Viellagenauftragsschweißung der eingangs genannten Art eine Verbesserung dahingehend zu erzielen, daß Restbereiche von Gußgefügebereichen und grobkörnigen Gefügeanteilen vermieden und ein ausschließlich Feinkorngefüge aufweisendes Schweißgut hergestellt wird. Weil das bekannte Verfahren zur Herstellung von Konstruktionsteilen durch Form-Schweißen einen relativ hohen Aufwand an elektrischer Schweißenergie erfordert, wird mit der Erfindung zugleich eine Erhöhung der Wirtschaftlichkeit des Verfahrens durch Verringerung der beim Wiederaufschmelzen einer unteren Lage verlorenen Energie angestrebt. Zugliech mit Erreichung dieser Ziele soll möglichst auch die Arbeitskapazität, das heißt die in einer Zeiteinheit aufgetragene Menge Schweißgut bezogen auf gleiche Energieeinspeisung, gesteigert werden.

Die Lösung der gestellten Aufgabe gelingt bei einem Verfahren zur Herstellung eines Konstruktionsteiles aus Schweißgut durch formgebende Auftragsschweißung der eingangs genannten Art mit der Erfindung dadurch, daß jeweils werkstoffabhängige günstige Schweißraupenlage aufgebracht wird, daß die darunterliegenden Gefügeschichten vollkommen in eine Zone feinkörnigen Gefüges umgewandelt wird und das Konstruktionsteil ein homogenfeinkörniges Gefüge mit isotropen Eigenschaften aufweist.

Mit Vorteil ergibt sich bei der Wahl der Raupengeometrie als flache Schweißraupe mit einem im wesentlichen mehr linsenförmigen Querschnitt eine Lenkung der Wärmeeinflußzone dahingehend, daß sie eine komplette feinkörnige Wiederumwandlung des Gefüges in den vorhergehenden Gefügeschichten bewirkt.

Eine Ausgestaltung sieht vor, daß die Schweißraupenlage mit einer derartigen Dimensionierung ausgeführt wird, daß ihre Schmelzbadtiefe gleich oder geringer ist als die Summe ihrer Einbrand-Tiefe und der Tiefe der feinkörnigen Wärmeeinflußzone, so daß das Konstruktionsteil ein vollständig homogenes, feinkörniges Gefüge aufweist.

Mit Vorteil sieht eine Ausgestaltung vor, daß die Schweißraupenlage so ausgeführt wird, daß sie einen flach verlaufenden Wurzelbereich aufweist.

Zu einer vorteilhaft-unkomplizierten Erreichung der vorgesehenen Raupengeometrie wird mit der Erfindung vorgeschlagen, daß zur Herstellung dieser Schweißraupenlage eine Elektrodenanordnung verwendet wird, die eine flache, mehr linsenförmige statt pilzförmige Raupengeometrie gewährleistet.

Eine sehr vorteilhaft-unkomplizierte Ausgestaltung ergibt sich mit der weiteren ausgestaltung der Erfindung dadurch, daß als Elektrode ein flaches Metallband verwendet wird.

Es können als Elektrode Bänder oder eine Mehrzahl von quer zur Arbeitsrichtung parallel geführte Einzelelektroden, beispielsweise Drahtelektroden, verwendet werden. Um das Ziel der Erfindung, die Ausbildung eines homogen-feinkörnigen Gefüges im Schweißgut durch eine sinnvolle, flankierende Maßnahme zu unterstützen, wird mit der Erfindung weiter vorgeschlagen, daß in an sich bekannter Weise das Konstruktionsteil während der Auftragsschweißung auf einem erhöhtem Temperatur-Niveau gehalten wird, welches die günstigste Gefügeausbildung zur Erzielung hoher Zähigkeits- und Festigkeitseigenschaften gewährleistet.

Ein Konstruktionsteil, welches aus Schweißgut durch formgebende Viellagenschweißung hergestellt ist, wobei das Schweißgut in aufeinanderfolgenden Schweißraupen aufgebaut ist, unterscheidet sich dadurch von ähnlichen, nach dem Stand der Technik hergestellten Teilen, daß es nach einem den vorhergehenden Ansprüchen entsprechenden Verfahren hergestellt ist und ein homogen-feinkörniges Gefüge mit isotropen Eigenschaften aufweist.

Das Konstruktionsteil mit diesem homogen-feinkörnigen Gefüge ist dadurch gekennzeichnet, daß es besonders geeignet ist, die Herstellung eines Schweißguts, dessen Materialqualität der Stahlqualität 10 MnMoNi 5 5 entspricht.

Die Erfindung wird im Vergleich zum Stand der Technik in einer rein schematisch dargestellten Ausführungsform gezeigt, wobei aus den Zeichnungen weitere vorteilhafte Einzelheiten der Erfindung entnehmbar sind.

Es zeigen:

Figur 1 Maßangaben für eine Schweißraupe nach dem Stand der Technik, in rein schematischer Darstellung, im Querschnitt,

Figur 2 drei sich überlappende Schweißraupen nach dem Stand der Technik, in rein schematischer Darstellung, im Querschnitt,

Figur 3 Maßangaben für eine Schweißraupe nach der Erfindung, in rein schematischer Darstellung, im Querschnitt,

Figur 4 drei sich überlappende Schweißraupen nach der Erfindung, ebenfalls in rein schematischer Darstellung, im Querschnitt, und

Figur 5 eine schematische Darstellung z. B. der Einbrandtiefenbestimmung nach der Erfindung.

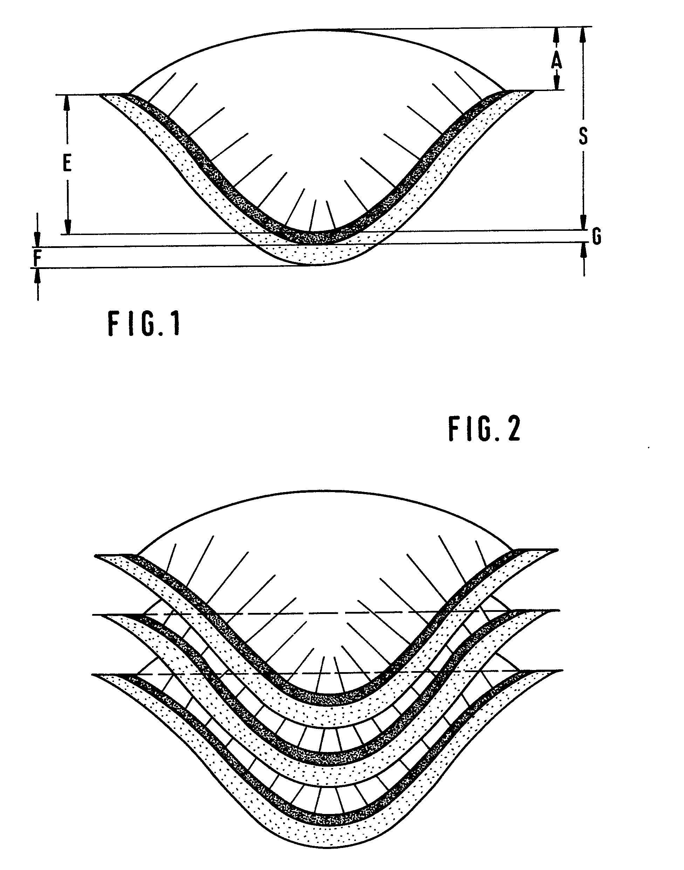

Bei der Schweißraupe nach dem Stand der Technik gemäß Figur 1 ergibt sich eine geometrische Querschnittsform mit undefinierten Maßverhältnissen zwischen der Schmelzbadtiefe S, der Einbrandtiefe E, der Grobkornzonentiefe G, der Feinkornzonentiefe F und der Auftragdicke A.

Hierdurch entstehen beim Übereinanderschweißen von mehreren Raupenlagen undefinierte Umkörnungsverhältnisse und das so entstandene Schweißgut besteht dann aus schichtweise wechselnden Gefügebereichen, zwischen unumgewandeltem Gußgefüge (schräg gestrichelt), grobkörnig umgewandeltem Gefüge (schwarzer Bereich) und feinkörnig umgewandeltem Gefüge (punktierter Bereich).

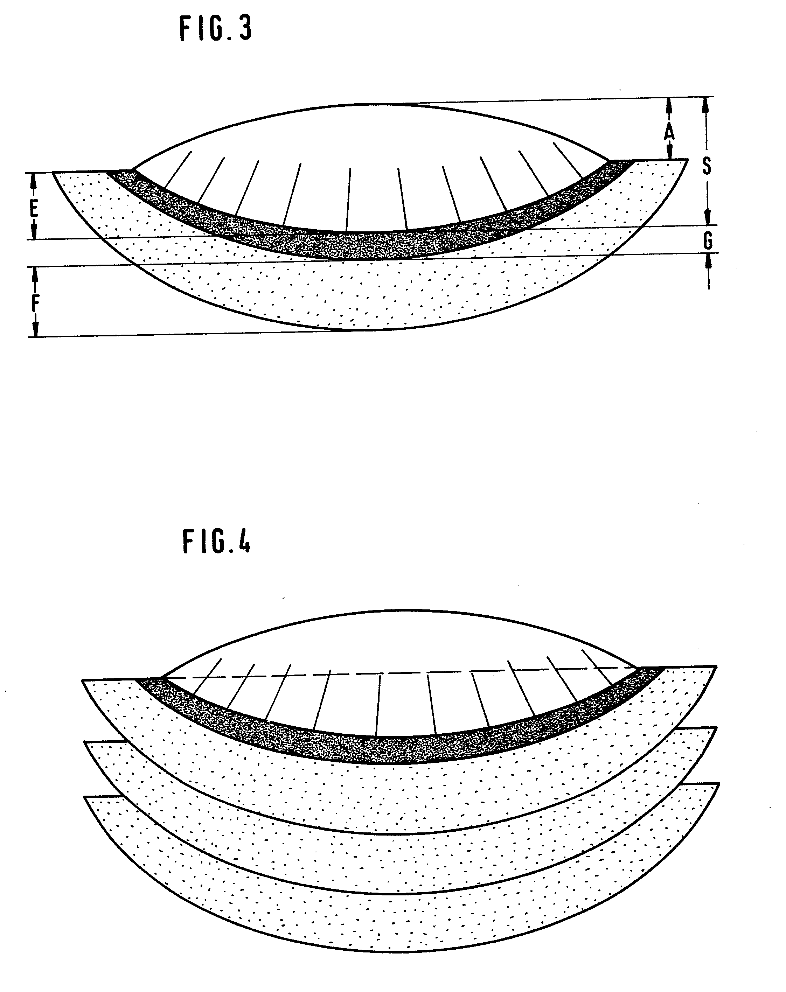

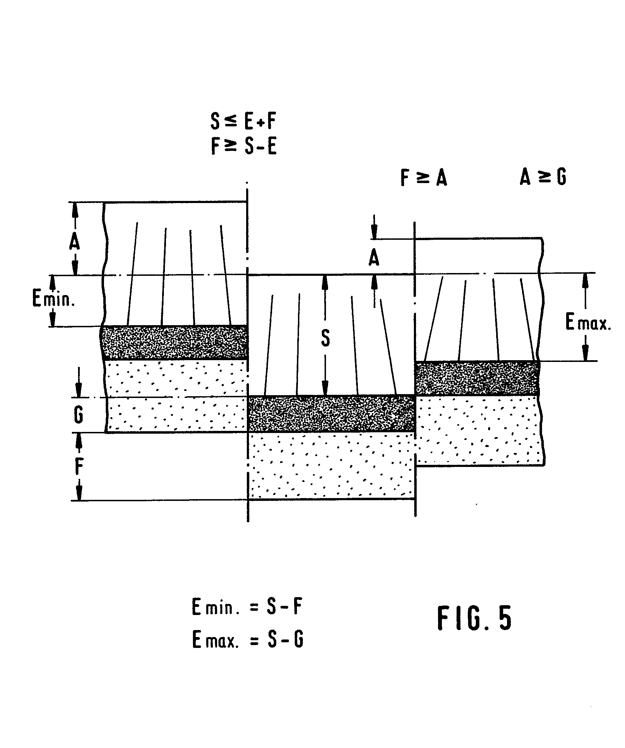

Als Beispiel für eine Schweißausführung der Erfindung zeigt Figur 3 eine geänderte geometrische Querschnittsform für die einzelraupe, mit definierten Maßverhältnissen zwischen S, E, G, F und A, welche beim Übereinanderlegen von mehreren Schweißraupenlagen eine vollständige feinkörnige Gefügeumwandlung in dem darunterliegenden Schweißgut bewirkt, wie dies in Figur 4 und 5 schematisch dargestellt wird.

Da die Vorgabe von S, E, F, G und A für die Erfüllung der in Figur 5 dargestellten Bedingungen werkstoffabhängig mittels Schweißparameteroptimierung zu gewährleisten ist, erfüllt die Erfindung in einfacher Weise und unter Anwendung einfacher Mittel optimal die eingangs gestellte Aufgabe.

0163828

Zu beachten ist bei der werkstoffabhängigen Auswahl der Schweißparameter, daß die folgenden Beziehungen gemäß Figur 5 erfüllt sind:

$$S \leq E + F$$
$$F \geq S - F$$
$$F \geq A$$
$$A \geq G$$

$$E\ min = S - F$$
$$E\ max = S - G$$

0163828

Patentansprüche:

1. Verfahren zur Herstellung eines Konstruktionsteiles aus Schweißgut durch formgebende Viellagen-Auftragsschweißung, wobei das Schweißgut in Schweißraupenlagen aufgetragen und das Gefüge einer Schweißraupenlage beim Auftragen folgender Lagen ein- oder mehrfach thermisch umgewandelt wird, dadurch gekennzeichnet, daß jeweils derart werkstoffabhängige günstige Schweißraupenform, Schmelzbadtiefe, Einbrandtiefe, Tiefe der darunterliegenden grobkörnig umgewandelten, bzw. feinkörnig umgewandelten Gefügezonen vorgegeben werden, daß die darunterliegenden Gefügeschichten vollkommen in eine Zone feinkörnigen Gefüges umgewandelt werden und das Konstruktionsteil ein homogen-feinkörniges Gefüge aufweist.

2. Verfahren nach Anspruch 1, dadurch gekennzeichnet, daß die einzelnen Schweißraupen so dimensioniert werden, daß ihre Schmelzbadtiefe gleich oder geringer ist als die Summe ihrer Einbrandtiefe und Feinkornzonentiefe.

3. Verfahren nach Anspruch 1 oder 2, dadurch gekennzeichnet, daß die Auftragdicke der einzelnen Schweißraupen gleich oder geringer als die Feinkornzonentiefe und gleich oder größer als die Grobkornzonentiefe gehalten wird.

4. Verfahren nach einem der Ansprüche 1 bis 3, dadurch gekennzeichnet, daß die minimale Einbrandtiefe gleich der Differenz zwischen Schmelzbadtiefe und Feinkornzonentiefe und die maximale einbarndtiefe gleich der Differenz von Schmelzbadtiefe und Grobkornzonentiefe ist.

0163828

5. Verfahren nach einem der Ansprüche 1 bis 4, dadurch gekennzeichnet, daß die Schweißraupenlage so ausgeführt wird, daß sie einen flach verlaufenden Wurzelbereich aufweist.

6. Verfahren nach einem der Ansprüche 1 bis 5, dadurch gekennzeichnet, daß als Elektrode ein flaches Metallband verwendet wird.

7. Verfahren nach einem der Ansprüche 1 bis 6, dadurch gekennzeichnet, daß als Elektrode eine Mehrzahl von quer zur Arbeitsrichtung parallel geführten Einzelelektroden verwendet wird.

8. Verfahren nach einem der vorhergehenden Ansprüche, dadurch gekennzeichnet, daß das Konstruktionsteil während der Auftragsschweißung auf einem erhöhtem Temperatur-Niveau gehalten wird.

9. Konstruktionsteil, welches aus Schweißgut durch formgebende Viellagenschweißung hergestellt ist, wobei das Schweißgut in aufeinanderfolgenden Schweißraupenlagen aufgebaut ist, dadurch gekennzeichnet, daß es nach einem den vorhergehenden Ansprüchen 1 bis 8 entsprechenden Verfahren hergestellt ist und ein homogen-feinkörniges Gefüge aufweist.

10. Konstruktionsteil nach Anspruch 9, dadurch gekennzeichnet, daß es aus einem Schweißgut hergestellt ist, dessen Materialqualität der Stahlqualität 10 MnMoNi 5 5 entspricht.

FIG.1

FIG.2

FIG.3

FIG.4

0163828

$$S \leq E+F$$
$$F \geq S-E$$

$$F \geq A \qquad A \geq G$$

$$E\,min. = S-F$$
$$E\,max. = S-G$$

FIG. 5

## EINSCHLÄGIGE DOKUMENTE

EP 85103188.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AT - B - 338 592 (GUTEHOFFNUNGS-HÜTTE) <br> * Fig. 1-5; Patentanspr. 1 * <br> -- | 1,6,7,8 | B 23 K 9/04 |
| A | DE - A1 - 2 135 149 (DEMAG) <br> * Fig. 1,2 * <br> -- | 7 | |
| A | DE - A - 2 143 960 (VERSCHLEIß-TECHNIK) <br> * Fig. 1 * <br> -- | 6 | |
| A | DE - B2 - 2 713 285 (SUMITOMO) <br> * Spalte 3, Zeilen 18-33 * <br> ---- | 1 | |

| RECHERCHIERTE SACHGEBIETE (Int. Cl.4) |
|---|
| B 23 K 9/00 <br> B 23 K 31/00 |

Der vorliegende Recherchenbericht wurde für alle Patentansprüche erstellt.

| Recherchenort | Abschlußdatum der Recherche | Prüfer |
|---|---|---|
| WIEN | 22-07-1985 | BENCZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82